(19) Europäisches Patentamt
European Patent Office
Office européen des brevets

(11) Numéro de publication : 0 504 011 B1

(12) **FASCICULE DE BREVET EUROPEEN**

(45) Date de publication du fascicule du brevet : **21.06.95 Bulletin 95/25**

(51) Int. Cl.[6] : **G02B 3/00,** B29D 11/00

(21) Numéro de dépôt : **92400569.7**

(22) Date de dépôt : **05.03.92**

(54) **Procédé pour l'obtention d'un article en matériau polymère transparent à gradient d'indice de réfraction.**

(30) Priorité : **08.03.91 FR 9102827**

(43) Date de publication de la demande : **16.09.92 Bulletin 92/38**

(45) Mention de la délivrance du brevet : **21.06.95 Bulletin 95/25**

(84) Etats contractants désignés : **CH DE ES GB IT LI NL**

(56) Documents cités :
**EP-A- 0 109 586**
**US-A- 3 486 808**
**US-A- 3 718 383**
**PATENT ABSTRACTS OF JAPAN vol. 010, no. 022 (P-424)28 Janvier 1986 & JP A 60175009**

(73) Titulaire : **ESSILOR INTERNATIONAL, Cie Générale d'Optique**
**1 Rue Thomas Edison,**
**Echat 902**
**F-94028 Créteil Cédex (FR)**

(72) Inventeur : **Yean, Leanirith**
**2 Rue des Lavandes**
**F-91160 Lonjumeau (FR)**
Inventeur : **Wajs, Georges**
**67 Avenue Danièle Casanova**
**F-94200 Ivry (FR)**
Inventeur : **Martin, Gérard**
**1 Allée du Gange**
**F-92160 Antony (FR)**
Inventeur : **Guerrero, Patrick**
**1 Rue du Mougre**
**F-77710 Lorrez le Bocage (FR)**

(74) Mandataire : **CABINET BONNET-THIRION**
**95 Boulevard Beaumarchais**
**F-75003 Paris (FR)**

EP 0 504 011 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne d'une manière générale l'obtention d'un article en matériau polymère transparent à gradient d'indice de réfraction, l'indice de réfraction y variant de manière continue suivant au moins une direction.

Elle vise plus particulièrement, mais non nécessairement exclusivement, le cas où un tel article est susceptible d'être mis en oeuvre pour la réalisation d'une lentille ophtalmique.

Ainsi qu'on le sait, la variation de l'indice de réfraction au sein d'une lentille ophtalmique permet, par exemple, à correction égale, d'en réduire, si désiré, l'épaisseur maximale, et donc le poids, au bénéfice du confort de l'usager.

Divers procédés ont déjà été proposés pour l'obtention d'un gradient d'indice de réfraction dans un matériau polymère.

Par exemple, et c'est le cas notamment dans le brevet américain US-A-3.718.383, on peut assurer l'absorption, en pratique par diffusion, par le matériau polymère, en l'espèce durci, d'une composition additive; en pratique un diluant.

En variante, et c'est le cas dans le document de brevet japonais No 60-175009, on peut intervenir sur un gel, avec un monomère apte à conduire à un polymère d'indice de réfraction différent de celui du matériau de base, en assurant ensuite une polymérisation finale de l'ensemble pour y fixer la géométrie du gradient-d'indice de réfraction alors obtenu.

Mais cette géométrie dépend directement'du profil de concentration du monomère au sein du matériau polymère de base.

Elle dépend donc de l'interaction polymère monomère et elle peut de ce fait être au moins en partie influencée par les changements de température susceptibles d'intervenir lors de la diffusion.

Mais, il est difficile, dans ces conditions, de contrôler de manière précise la distribution spatiale du gradient d'indice de réfraction obtenu.

En outre, la distance sur laquelle il est possible d'obtenir un gradient d'indice de réfraction, qui correspond à la distance de diffusion du monomère dans le matériau polymère de base, est, dans l'un et l'autre cas, limitée.

Pour obtenir un contrôle précis de la distribution spatiale du gradient d'indice de réfraction, il a par ailleurs été envisagé de faire diffuser dans un gel un mélange de monomères, de faire varier dans le temps la composition de ce mélange au cours de la diffusion jusqu'à obtenir un profil de concentration relative correspondant au profil de gradient d'indice de réfraction recherché, et de parachever ensuite la polymérisation de l'ensemble pour fixer la géométrie ainsi obtenue pour le gradient d'indice de réfraction.

Mais, si, pour le reste, ce procédé donne satisfaction, il ne permet pas, non plus, d'étendre de manière notable la distance sur laquelle peut ainsi être obtenu un gradient d'indice de réfraction, celle-ci étant encore limitée par la diffusion pratiquée.

La présente invention a d'une manière générale pour objet un procédé permettant de surmonter cette difficulté, et de maîtriser et contrôler la distribution spatiale du gradient d'indice de réfraction obtenu.

Ce procédé, qui vise donc l'obtention d'un article en matériau polymère transparent à gradient d'indice de réfraction, est du genre suivant lequel on assure l'absorption, par le matériau polymère, d'une composition additive renfermant au moins un monomère apte à conduire à un polymère d'indice de réfraction différent de celui du matériau polymère de base, et il est d'une manière générale caractérisé en ce que, choisissant pour composition additive une composition gonflante, on réalise, suivant une première géométrie, une première préforme en matériau polymère de base de taux d'avancement suffisant pour que cette première préforme soit autoporteuse, on définit un volume de confinement entre cette première préforme et un élément de butée ayant une deuxième géométrie qui, au moins en partie différente de la première, correspond à un volume supérieur à celui auquel correspond celle-ci, on met en contact, dans ce volume de confinement, ladite première préforme, avec une quantité suffisante de la composition additive gonflante pour que le gonflement dont elle est alors l'objet la conduise à épouser sous contrainte ladite deuxième géométrie, on assure la polymérisation du matériau polymère résultant, et, le cas échéant, on surface, à la géométrie finale désirée pour l'article recherché, la deuxième préforme ainsi obtenue.

En bref, en contrebutant, suivant l'invention, le gonflement dont est l'objet le matériau polymère traité, on crée dans la partie concernée de celui-ci un gradient de gonflement dont résulte pour l'essentiel le gradient d'indice de réfraction recherché.

Or ce gradient de gonflement ne dépend lui-même que de la différence entre les deux géométries entre lesquelles se développe d'une préforme à l'autre le gonflement.

Ainsi, la distribution spatiale du gradient d'indice de réfraction obtenu au sein de la deuxième préforme ne dépend que de ce différentiel de géométrie.

Il est donc possible, suivant l'invention, d'obtenir n'importe quel profil de gradient d'indice de réfraction sur tout ou partie de l'article concerné.

Il suffit en effet de choisir en conséquence les deux géométries à mettre en oeuvre.

En outre, avec le gradient de gonflement mis en place suivant l'invention, et au contraire de ce qui est obtenu avec les procédés de diffusion de l'art antérieur décrits précédemment, le gradient d'indice de réfraction se développe avantageusement suivant une direction transversale par rapport à celle suivant laquelle s'établit ce gonflement.

En pratique, il s'agit d'une direction radiale pour l'article concerné.

Quoi qu'il en soit, il n'y a de ce fait plus de limite quant à la distance sur laquelle peut étendre ses effets le gradient d'indice de réfraction obtenu.

Comme précédemment, il suffit en effet de choisir en conséquence les deux géométries mises en oeuvre.

Enfin, il est au moins théoriquement possible, suivant l'invention, et des essais le confirment, de faire en sorte que le gradient d'indice de réfraction ne soit dû qu'au seul gonflement.

Tout au long de toute droite parallèle à la direction suivant laquelle s'est développé le gradient de gonflement correspondant, l'indice de réfraction est alors avantageusement constant.

Dans tous les cas, la différence maximale d'indice de réfraction qu'il est possible d'obtenir avec le procédé suivant l'invention dépend, d'une part, de l'indice de réfraction du matériau polymère de base et de celui de la composition additive gonflante, et, d'autre part, du taux de gonflement maximal de ce matériau polymère de base vis-à-vis de cette composition additive gonflante.

Il suffit donc de choisir en conséquence l'un et l'autre de ces matériaux.

Les caractéristiques et avantages de l'invention ressortiront d'ailleurs de la description qui va suivre, à titre d'exemple, en référence aux dessins schématiques annexés sur lesquels :

la figure 1 est une vue en perspective d'un article en matériau polymère transparent à gradient d'indice de réfraction à la réalisation duquel peut être appliquée l'invention ;

la figure 2 est une vue en coupe se rapportant à la réalisation préalable d'une première préforme de cet article ;

la figure 3 est une vue en coupe de la préforme correspondante ;

la figure 4 est une vue en coupe correspondant à la réalisation d'une deuxième préforme de l'article recherché ;

la figure 5 est une vue en coupe de cette deuxième préforme, telle que supposée polymérisée in situ avant d'avoir atteint un équilibre de gonflement total ;

la figure 6 est une vue en coupe de l'article recherché, tel que supposé obtenu après un surfaçage approprié de la deuxième préforme précédente ;

les figures 7 et 8 sont des diagrammes se rapportant à cet article ;

les figures 9, 10, 11 et 12 sont des vues en coupe axiale qui, analogues à celle de la figure 5, se rapportent chacune respectivement à des préformes auxquelles correspondent des distributions spatiales de gradient d'indice différentes de celle à laquelle correspond la préforme représentée sur cette figure 5 ;

la figure 13 est un diagramme récapitulatif de ces distributions spatiales de gradient d'indice ;

la figure 14 est une vue en coupe analogue à celle de la figure 4, pour une variante de mise en oeuvre.

Ces figures 1 à 14 illustrent à titre d'exemple l'application de l'invention à l'obtention d'une lentille ophtalmique 10 représentée isolément sur les figures 1 et 6.

Globalement, pour cette obtention, on assure l'absorption, par un matériau polymère de base transparent, et suivant des modalités décrites plus en détail ultérieurement, d'une composition additive renfermant au moins un monomère apte à conduire à un polymère d'indice de réfraction différent de celui du matériau polymère de base.

Ce faisant, et suivant l'invention, on choisit pour composition additive une composition gonflante.

En pratique, le choix du couple matériau polymère de base, d'une part, composition additive gonflante renfermant au moins un monomère, d'autre part, doit préférentiellement répondre aux exigences suivantes :

Tout d'abord, et par définition, le matériau polymère de base doit être gonflable sous l'action de la composition additive gonflante, au moins dans une mesure suffisante pour la mise en oeuvre du procédé suivant l'invention.

Préférentiellement, mais non nécessairement obligatoirement, le matériau polymère de base et la composition additive gonflante sont choisis de manière à ce que le matériau polymère de base présente un gonflement d'au moins 100 % dans la composition additive gonflante.

En outre, le matériau polymère final doit être transparent.

Enfin, pour l'obtention d'un gradient d'indice de réfraction significatif, il doit exister, entre le matériau polymère de base et le polymère correspondant à la composition additive gonflante, une différence minimale d'indice de réfraction.

Préférentiellement, le matériau polymère de base et la composition additive gonflante sont choisis de manière à ce que cette différence d'indice de réfraction soit au moins égale à 0,005.

Par exemple, le matériau polymère de base comporte une polyoléfine.

Plus précisément, il peut par exemple être une telle polyoléfine.

Préférentiellement, il est alors formé en majeure partie de styrène, et la composition additive gonflante correspondante renferme essentiellement du méthacrylate de méthyle.

Le taux de gonflement G correspondant est de 100 %, et l'écart maximal Dmax susceptible d'être obtenu pour l'indice de réfraction est de l'ordre de 0,05.

Préférentiellement, le matériau polymère de base est additionné de réticulant, tel que par exemple le divinylbenzène, ou le triéthylène glycol diméthacrylate (par abréviation : TEGDM), à raison, dans ce cas, de 0,5%.

De même, la composition additive gonflante est préférentiellement additionnée de réticulant, tel que par exemple le TEGDM.

Préférentiellement, également, le matériau polymère de base renferme aussi un produit, qui, tel que par exemple l'allylméthacrylate, à raison, dans ce cas, de 10 %, est propre à relier son réseau à celui de la composition additive, pour l'obtention, pour le matériau polymère final obtenu, d'un réseau de type semi-RPI, c'est-à-dire d'un réseau, qui, tout en s'apparentant aux réseaux polymères interpénétrés, comporte des liaisons chimiques entre les polymères qui le constituent.

Le tableau I suivant donne un exemple spécifique pour un tel couple de matériau polymère de base et de composition additive gonflante, avec les résultats correspondants.

Tableau I

| Matériau polymère de base | Composition additive gonflante | Résultats |
|---|---|---|
| Styrène<br>Allylméthacrylate (10 %)<br>Divinylbenzène ou TEGDM (0,5 %) | Méthacrylate de méthyle<br>TEGDM | G = 100 %<br>Dmax = 0,05 |

Les taux entre parenthèses dans ce tableau I sont appréciés par rapport à un taux de 100 % pour le styrène et sont des taux massiques.

En variante, le matériau polymère de base peut comporter un polyuréthanne.

Plus précisément, il peut par exemple être un tel polyuréthanne.

Par exemple, il résulte alors en majeure partie de la réaction d'une composition comportant au moins un isocyanate et au moins un polyol, et la composition additive gonflante correspondante renferme alors essentiellement du styrène.

Le tableau II ci-après donne des exemples spécifiques d'un tel couple de matériau polymère de base et de composition additive gonflante, avec les résultats correspondants.

Tableau II

| Matériau polymère de base | Composition additive gonflante | Résultats |
|---|---|---|
| IPDI (1)<br>U 1004 (0,6) [catalyseur : DBLE]<br>T 301 (0,3)<br>HEMA (0,1) | Styrène + TEGDM 1 % | G = 100 %<br>Dmax = 0,05 |
| HDT (1)<br>CAPA 200 (0,9)<br>HEMA (0,1) | Styrène + TEGDM 1 % | G = 400 %<br>Dmax = 0,07 |
| DESMODUR N 100 (1)<br>CAPA 200 (0,9)<br>HEMA (0,1) | Styrène + TEGDM 1 % | G = 250 %<br>Dmax = 0,06 |
| HDT (0,5)<br>DESMODUR W (0,4)<br>Isocyanatoéthyl méthacrylate (0,1)<br>CAPA 200 (1) | Styrène + TEGDM 1 % | G = 150 %<br>Dmax = 0,05 |

Dans le tableau II, les abréviations ont les significations suivantes :

| | |
|---|---|
| IPDI | : isophorone diisocyanate fabriqué par HULS |
| U 1004 * | : polyetherdiol fabriqué par UGINE-KUHLMANN |
| T 301 * | : polyester triol fabriqué par UNION CARBIDE |
| HEMA | : hydroxy éthyl méthacrylate |
| HDT * | : triisocyanatohexyle isocyanurate fabriqué par RHONE-POULENC |
| DBLE | : dibutyldilaurate d'étain |
| CAPA 200 * | : polyesterdiol fabriqué par la Sté SOLVAY |
| DESMODUR W * | : diisocyanate de dicyclohexyle méthane fabriqué par BASF |
| DESMODUR N 100 * | : triisocyanatohexyle biuret fabriqué par BASF. |

En outre, les chiffres indiqués entre parenthèses dans le tableau II correspondent aux proportions des fonctions réactives isocyanate, d'une part, et alcool, d'autre part.

Enfin, dans le tableau II, et à la manière de l'allylméthacrylate précédent, l'hydroxy éthyl méthacrylate (par abréviation : HEMA), ou l'isocyanatoéthyl méthacrylate, constituent des produits propres à relier le réseau du matériau polymère de base à celui de la composition additive gonflante [V. NEVISSAS, J.M. WIDMAYER et G.C. MEYER (CRM de STRASBOURG), Journal of Applied Polymer Science, vol. 36, 1467-1473 (1988)].

Suivant une autre variante, le matériau polymère de base peut comporter à la fois un polyuréthanne et un

* : Marque commerciale.

monomère, non polymérisé à ce stade, de type allylique.

La composition additive gonflante renferme alors essentiellement du styrène.

Le tableau III ci-après donne un exemple spécifique de tels matériaux, avec le résultat correspondant, et dans les mêmes conditions que précédemment.

Tableau III

| Matériau polymère de base | Composition additive gonflante | Résultats |
|---|---|---|
| HDT (1)<br>CAPA 200 (0,9) [catalyseur : DBLE]<br>HEMA (0,1)<br>} 99% à 70%<br>XR80 + TBPIN : 1% à 30% | Styrène + TEGDM 1% | G = 150 %<br>Dmax = 0,05 |

Dans ce tableau III, les abréviations ont les significations suivantes :

TBPIN : terbutylperoxy triméthylhexanoate fabriqué par SCPO

XR80 * : diallylcarbonate de diéthylène glycol fabriqué par RHONE-POULENC.

Il est en outre à souligner que, le matériau polymère de base comportant, comme indiqué, outre un polyuréthanne, un monomère allylique, on forme, dans un premier temps, dans ce cas, le réseau polyuréthanne, le monomère allylique présent dans le milieu étant destiné à réagir lors de la polymérisation finale, après gonflement.

La première préforme est donc, dans ce cas, un réseau polyuréthanne imprégné de monomère allylique.

Ce monomère allylique permet d'augmenter, après sa polymérisation, les propriétés mécaniques de la deuxième préforme, et, donc, de l'article final obtenu.

Compte tenu de ce qui précède, il est également à souligner que les indices de réfraction auxquels il est fait référence dans la présente demande sont ceux des polymères pris dans leur état final, c'est-à-dire après la polymérisation finale ayant conduit à l'article désiré, et que c'est dans un sens large que doit être étendue dans la présente demande l'expression "matériau polymère de base".

Suivant une autre variante, le matériau polymère de base comporte à la fois un polyuréthanne et un monomère acrylique ou méthacrylique jouant le même rôle que le monomère allylique de la variante précédente.

Le tableau IV ci-après illustre cette possibilité, dans les mêmes conditions que ci-dessus.

* : Marque commerciale

Tableau IV

| Matériau polymère de base | | Composition additive gonflante | Résultats |
|---|---|---|---|
| HDT (1)<br>CAPA 200 (0,9)<br>[catalyseur : DBLE]<br>HEMA (0,11) | 99 % à 70 % | Styrène + TEGDM 1% | G = 150 %<br><br>Dmax = 0,05 |
| Méthacrylate de méthyle<br>TEGDM (1 %) | 1 % à 30 % | | |

On donnera maintenant, en référence aux figures 1 à 6, des modalités pratiques d'exécution de l'invention.

On réalise tout d'abord, figures 2 et 3, une première préforme P1 en matériau polymère de base de taux d'avancement suffisant pour que cette première préforme P1 soit autoporteuse.

Par exemple, on prépare le matériau polymère de base en faisant réagir, dans un moule 11 formé de deux coquilles de moulage 12, 12′ et d'un joint annulaire 13 les entretoisant, la composition suivante, qui relève du tableau II précédent :

HDT (1)
CAPA 200 (0,9)
HEMA (0,1)

Il n'y a a priori aucun lien entre la géométrie G1 à donner à la première préforme P1 à mettre en oeuvre et celle G0 recherchée pour la lentille ophtalmique 10 désirée, sauf, bien entendu à permettre effectivement l'obtention de cette dernière.

Dans l'exemple d'application représenté, la lentille ophtalmique 10 est une lentille concavo-convexe, d'axe optique XY, et de géométrie G0 formée pour l'essentiel de deux surfaces S0, S′0, l'une convexe, l'autre concave.

A titre d'exemple 1, et tel que représenté, la première préforme P1 recherchée est alors par exemple biconvexe, avec une géométrie G1 formée de deux surfaces convexes S1, S′1.

Par exemple, l'épaisseur au centre E1 de cette préforme P1 est de 10 mm, son épaisseur E2 le long de son bord est de 5 mm, son diamètre 2R est de 80 mm, et le rayon de ses surfaces convexes S1, S′1 est de 254 mm.

Le moule 11 est établi en conséquence.

Il a donc, intérieurement, la géométrie G1.

Préférentiellement, il est ajouté, à titre de catalyseur, dans la composition mise en place dans ce moule 11, du DBLE, à raison de 0,1 %, et l'ensemble est porté de 42°C à 80°C en 10 h, pour être ensuite maintenu à 80°C pendant 4 h.

Dans le matériau polymère de base constituant alors la première préforme P1 ainsi obtenue, le taux d'avancement est de l'ordre de 100 %.

En variante, il pourrait être compris entre au moins le taux d'avancement à la prise en gel du matériau et 100 %.

D'une manière générale, il suffit qu'il permette à la première préforme P1 obtenue d'être autoporteuse.

Quoi qu'il en soit, l'indice de réfraction du matériau polymère transparent correspondant est de 1,5.

Suivant l'invention, on définit d'une manière générale ensuite un volume de confinement 14 entre cette première préforme P1 et au moins un élément de butée 16, 16′ ayant en regard d'elle une deuxième géométrie G2 qui, au moins en partie différente de la première géométrie G1, correspond à un volume supérieur à-celui auquel correspond celle-ci.

Par exemple, et tel que c'est le cas dans la forme de mise en oeuvre plus particulièrement représentée sur la figure 4, on dispose cette première préforme P1 dans une enceinte de confinement 15.

Par exemple, et tel que représenté, cette enceinte de confinement 15 est, à la manière du moule 11, constituée, d'une part, de deux parois 16, 16′, dont chacune constitue un élément de butée 16, 16′, et, d'autre part, d'un joint annulaire 17 entretoisant ces parois 16, 16'.

Dans la forme de mise en oeuvre plus particulièrement représentée, les parois 16, 16' sont constituées l'une et l'autre par des plaques planes de surfaces internes S2, S'2 perpendiculaires à l'axe optique XY et espacées l'une de l'autre d'une distance qui, dans cette forme de mise en oeuvre, est égale à l'épaisseur au centre E1, soit 10 mm, de la première préforme P1.

Tel que schématisé par des flèches F, F', les parois 16, 16' sont dûment contrebutées, par exemple par une bride non représentée.

Suivant des modalités qui, relevant de l'homme de l'art, ne seront pas décrites ici, on met en contact, dans le volume de confinement 14 défini par cette enceinte de confinement 15, la première préforme P1 avec la composition additive gonflante retenue.

En l'espèce, il s'agit de styrène additionné de 1 % de TEGDM, et, à titre de catalyseur, de 0,5 % d'azobisisobutyronitrile.

L'indice de réfraction du polymère correspondant à cette composition additive gonflante est de 1,59.

En pratique, le gonflement dont est alors l'objet, à température ambiante, la première préforme P1, au contact de cette composition additive gonflante, dure quatre jours.

En pratique, également, la quantité de composition additive gonflante mise en oeuvre est suffisante pour que ce gonflement conduise cette première préforme P1 à épouser étroitement, sous contrainte, la deuxième géométrie G2 définie par les éléments de butée 16, 16' que constituent les parois 16, 16' de l'enceinte de confinement 15, tout se passant comme si ses surfaces convexes S1, S'1 venaient alors s'appliquer en tout point aux surfaces planes S2, S'2 correspondantes.

On assure alors la polymérisation du matériau polymère résultant, en soumettant l'ensemble à un cycle de chauffage durant lequel la température est élevée jusqu'à 100°C.

Bien entendu, cette polymérisation, effectuée in situ, doit intervenir avant que soit atteint l'équilibre de gonflement total, pour qu'il y ait effectivement un gradient de gonflement au sein du matériau traité.

C'est dans ce sens qu'il est précisé que la deuxième préforme P2 recherchée s'applique sous contrainte aux éléments de butée 16, 16' correspondants.

Du fait de cette application, la deuxième préforme P2 ainsi obtenue, figure 5, a effectivement une deuxième géométrie G2 qui est à l'image de celle définie par ces éléments de butée 16, 16'.

Il s'agit donc, en l'espèce, d'un palet de surfaces planes et de contour circulaire, le joint 17 constituant aussi pour sa part un élément de butée.

Pour mieux matérialiser l'invention, on a fait figurer, en traits interrompus, à la figure 5, dans ce palet, la géométrie G1 de la préforme P1 initiale.

A la figure 7, est représenté, en fonction du rayon R, le gonflement G intervenu entre la première préforme P1 et la deuxième préforme P2.

Compte tenu des modalités pratiques d'exécution, ce gonflement G est nul suivant l'axe optique XY, et croît ensuite radialement de part et d'autre de celui-ci, jusqu'à être maximal à la périphérie.

En l'espèce, compte tenu de l'épaisseur initiale E1 de la première préforme P1 le long de son bord, ce gonflement maximal est de 100 %.

Le diagramme de la figure 8 donne, en fonction du rayon R, le profil de l'indice de réfraction N, tel qu'obtenu après gonflement et polymérisation.

Sur l'axe optique XY, cet indice de réfraction est de l'ordre de 1,5.

A la périphérie, il est de l'ordre de 1,55.

Dans un troisième temps, lorsque, comme en l'espèce, cela est nécessaire, on surface, à la géométrie finale G0 désirée pour la lentille ophtalmique 10 recherchée, la deuxième préforme P2 préalablement obtenue.

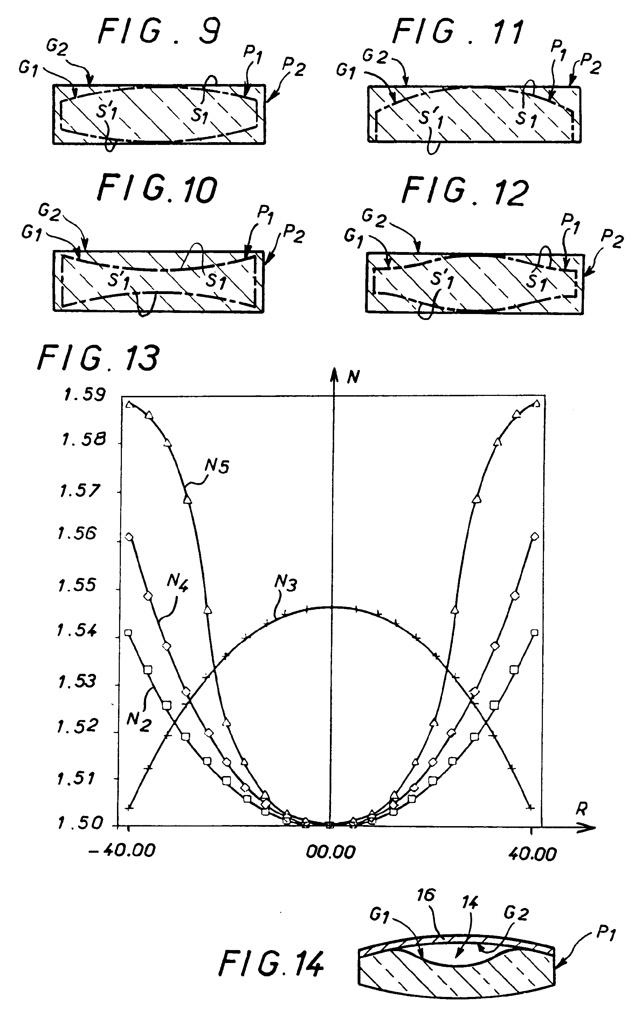

Les figures 9 à 12 se rapportent à des préformes P2 qui, à titre d'exemples, ont toutes la même géométrie G2 que la préforme P2 précédente, mais auxquelles correspondent des distributions spatiales d'indice de réfraction différentes, les préformes P1 dont elles sont issues, représentées en traits interrompus, ayant, elles, des géométries G1 différentes mais conservant le même diamètre 2R égal à 80 mm.

A la figure 9, exemple 2, la préforme P1 est biconvexe mais ses surfaces convexes S1, S'1 ont simplement un rayon différent de celui des surfaces convexes S1, S'1 précédentes.

Par exemple, ce rayon est de 321,25 mm, l'épaisseur au centre de 10 mm et l'épaisseur le long du bord de 5 mm.

A la figure 10, exemple 3, la préforme P1 est biconcave.

Par exemple, les rayons des surfaces concaves correspondantes sont chacun de 321,25 mm, l'épaisseur au centre est de 5 mm et l'épaisseur le long du bord de 10 mm.

A la figure 11, exemple 4, la préforme P1 est plan-convexe.

Par exemple, le rayon de la surface convexe correspondante est de 110,41 mm et l'épaisseur le long du bord de 2,5 mm.

Enfin, à la figure 12, exemple 5, le profil des surfaces S1, S′1 de la préforme P1 présente un point d'inflexion.

Par exemple, ces surfaces S1, S′1 ont un même profil, elles sont convexes dans leur zone centrale, leur rayon dans cette zone centrale est de 134,08 mm, le rayon de la zone concave de leur profil est de 81,25 mm, l'épaisseur au centre est de 10 mm, et l'épaisseur le long du bord est de 2 mm.

Le diagramme de la figure 13 donne le profil des indices de réfraction N correspondants, tels qu'obtenus après gonflement et polymérisation.

Sur ce diagramme, la courbe N2 correspond à l'exemple 2, la courbe N3 à l'exemple 3, la courbe N4 à l'exemple 4 et la courbe N5 à l'exemple 5.

Dans la variante de mise en oeuvre illustrée par la figure 14, le volume de confinement 14 n'intervient que localement, à la faveur d'une dépression locale, prévue à cet effet, de la surface S1 de la préforme P1.

Ce volume de confinement 14 est alors en pratique défini entre cette préforme P1 et une coquille de moulage 16, qui, constituant l'élément de butée 16 correspondant, épouse par ailleurs la forme de la surface S1.

Bien entendu, cette coquille de moulage 16 doit, comme précédemment, être contrebutée, ou, d'une manière plus générale, être fixe par rapport à la partie de la surface S1 de la préforme P1 non concernée par le volume de confinement 14 correspondant.

Bien entendu, également, la présente invention ne se limite pas aux exemples ainsi décrits et représentés, tant en ce qui concerne les géométries mises en oeuvre qu'en ce qui concerne les matériaux utilisés.

La présente invention ne se limite pas non plus aux modalités pratiques de mise en oeuvre explicitées, mais s'étend à toute variante.

En particulier, pour homogénéiser les propriétés mécaniques du polymère final, il est possible de faire en sorte qu'il se développe également un certain gonflement le long de l'axe optique.

Il suffit pour cela d'espacer de la première préforme P1 les éléments de butée 16, 16′ que constituent les parois 16, 16′ de l'enceinte de confinement 15, en prévoyant pour cette première préforme P1 des moyens d'entretoisement propres à son maintien entre ces parois 16, 16′.

Par exemple, le gonflement le long de l'axe optique XY peut alors être de 100 %, et celui le long de la périphérie être de l'ordre de 200 %.

De plus, au lieu d'intervenir sur l'une et l'autre des surfaces de la première préforme, le gonflement peut aussi bien n'intervenir que sur l'une de ces surfaces.

Cela peut notamment être le cas pour l'obtention d'une lentille ophtalmique semi-finie possédant déjà sur l'une de ses surfaces la géométrie requise.

De même, si dans ce qui précède, il a été prévu de développer un gonflement pour la totalité du matériau polymère de base, ce gonflement peut tout aussi bien n'affecter qu'une partie de celui-ci.

Enfin, bien que cela soit le cas dans l'exemple explicité, l'une et/ou l'autre des deux préformes successives ne présentent pas nécessairement une symétrie de révolution.

## Revendications

1. Procédé pour l'obtention d'un article en matériau polymère transparent à gradient d'indice de réfraction, du genre suivant lequel on assure l'absorption, par le matériau polymère de base, d'une composition additive renfermant au moins un monomère apte à conduire à un polymère d'indice de réfraction différent de celui du matériau polymère de base, caractérisé en ce que, choisissant pour composition additive une composition gonflante, on réalise, suivant une première géométrie (G1), une première préforme (P1) en matériau polymère de base de taux d'avancement suffisant pour que cette première préforme (P1) soit autoporteuse, on définit un volume de confinement entre cette première préforme (P1) et un élément de butée ayant en regard d'elle une deuxième géométrie (G2) qui, au moins en partie différente de la première, correspond à un volume supérieur à celui auquel correspond celle-ci, on met en contact dans ce volume de confinement (14) ladite première préforme (P1) avec une quantité suffisante de la composition additive gonflante pour que le gonflement dont elle est alors l'objet la conduise à épouser sous contrainte ladite deuxième géométrie (G2), on assure la polymérisation du matériau polymère résultant, et, le cas échéant, on surface, à la géométrie finale (G0) désirée pour l'article (10) recherché, la deuxième préforme (P2) ainsi obtenue.

2. Procédé suivant la revendication 1, caractérisé en ce que, pour la définition du volume de confinement (14), on dispose la première préforme (P1) dans une enceinte de confinement dont l'une au moins des parois constitue un élément de butée.

3. Procédé suivant l'une quelconque des revendications 1, 2, caractérisé en ce que le matériau polymère de base et la composition additive gonflante sont choisis de manière à ce que la différence d'indice de réfraction entre le matériau polymère de base et le polymère correspondant à la composition additive gonflante soit au moins égale à 0,005.

4. Procédé suivant l'une quelconque des revendications 1 à 3, caractérisé en ce que le matériau polymère de base comporte une polyoléfine.

5. Procédé suivant la revendication 4, caractérisé en ce que le matériau polymère de base est formé en majeure partie de styrène, et la composition additive gonflante renferme essentiellement du méthacrylate de méthyle.

6. Procédé suivant l'une quelconque des revendications 1 à 5, caractérisé en ce que le matériau polymère de base comporte un polyuréthanne.

7. Procédé suivant la revendication 6, caractérisé en ce que le matériau polymère de base résulte en majeure partie de la réaction d'une composition comportant au moins un isocyanate et au moins un polyol, et la composition additive gonflante renferme essentiellement du styrène.

8. Procédé suivant l'une quelconque des revendications 6, 7, caractérisé en ce que le matériau polymère de base comporte à la fois un polyuréthanne et un monomère, tel qu'un monomère allylique, acrylique ou méthacrylique.

9. Procédé suivant l'une quelconque des revendications 1 à 8, caractérisé en ce que le matériau polymère de base renferme également un produit propre à relier son réseau à celui de la composition additive gonflante.

10. Procédé suivant la revendication 1, caractérisé en ce que le gradient d'indice de réfraction se développe suivant une direction transversale par rapport à celle suivant laquelle s'établit le gonflement.

## Patentansprüche

1. Verfahren zur Herstellung eines Gegenstandes aus Kunststoff mit einem Brechungsindexgradient der Art, gemäß welcher durch das polymere Basismaterial die Absorption einer zusätzlichen Zusammensetzung sichergestellt wird, welche wenigstens ein Monomer enthält, welches fähig ist, zu einem Polymer mit einem von dem polymeren Basismaterial unterschiedlichen Brechungsindex zu führen, dadurch gekennzeichnet, daß indem als zusätzliche Zusammensetzung eine quellende Zusammensetzung gewählt wird, einer ersten Geometrie (G1) folgend eine erste Vorform (P1) aus polymerem Basismaterial mit einem ausreichenden Betrag der Entwicklung gebildet wird, damit diese erste Vorform (P1) selbsttragend ist, daß ein Begrenzungsvolumen zwischen dieser ersten Vorform (P1) und einem Anschlagelement definiert wird, welches diesem gegenüber eine zweite Geometrie (G2) aufweist, welche zumindest teilweise von der ersten verschieden ist und einem größeren Volumen als das diesem entsprechende entspricht, daß in diesem Begrenzungsvolumen (14) die erste Vorform (P1) mit einer ausreichenden Menge der quellenden, zusätzlichen Zusammensetzung in Kontakt gebracht wird, damit das Quellen, welchem sie unterworfen wird, dazu führt, sich unter Zwang an diese zweite Geometrie (G2) anzupassen, daß die Polymerisation des resultierenden, polymeren Materials sichergestellt wird und daß gegebenenfalls die Oberfläche der so erhaltenen zweiten Vorform (P2) bis zu der für den gesamten Gegenstand (10) gewünschten Endgeometrie (G0) bearbeitet wird.

2. Verfahren nach Anspruch 1, dadurch gekennzeichnet, daß für die Definition des Begrenzungsvolumens (14) die erste Vorform (P1) in einem Begrenzungsraum angeordnet wird, von welchen zumindest eine der Wände ein Anschlagelement darstellt.

3. Verfahren nach einem der Ansprüche 1 oder 2, dadurch gekennzeichnet, daß das polymere Basismaterial und die quellende, zusätzliche Zusammensetzung derart ausgewählt werden, daß der Unterschied des Brechungsindex zwischen dem polymeren Basismaterial und dem der quellenden, zusätzlichen Zusammensetzung entsprechenden Polymer zumindest gleich 0,005 ist.

4. Verfahren nach einem der Ansprüche 1 bis 3, dadurch gekennzeichnet, daß das polymere Basismaterial ein Polyolefin enthält.

5. Verfahren nach Anspruch 4, dadurch gekennzeichnet, daß das polymere Basismaterial zum größten Teil aus Styrol gefertigt wird und die quellende, zusätzliche Zusammensetzung im wesentlichen Methylmethacrylat enthält.

6. Verfahren nach einem der Ansprüche 1 bis 5, dadurch gekennzeichnet, daß das polymere Basismaterial ein Polyurethan enthält.

7. Verfahren nach Anspruch 6, dadurch gekennzeichnet, daß das polymere Basismaterial zum größten Teil aus der Reaktion einer Zusammensetzung, enthaltend zumindest ein Isocyanat und zumindest ein Polyol, resultiert und die quellende, zusätzliche Zusammensetzung im wesentlichen aus Styrol besteht.

8. Verfahren nach einem der Ansprüche 6 oder 7, dadurch gekennzeichnet, daß das polymere Basismaterial zugleich ein Polyurethan und ein Monomer, wie ein allylisches, acrylisches oder methacrylisches Monomer, enthält.

9. Verfahren nach einem der Ansprüche 1 bis 8, dadurch gekennzeichnet, daß das polymere Basismaterial auch ein Produkt enthält, welches geeignet ist, sein Netz an jenes der quellenden, zusätzlichen Zusammensetzung zu binden.

10. Verfahren nach Anspruch 1, dadurch gekennzeichnet, daß der Brechungsindexgradient sich entsprechend einer Richtung normal in bezug auf jene, gemäß welcher das Quellen stattfindet, entwickelt.

## Claims

1. A process for producing an article of transparent polymer material with a refractive index gradient, of the kind comprising effecting absorption by the basic polymer material of an additive composition containing at least one monomer capable of resulting in a polymer with a refractive index different from that of the basic polymer material, characterised in that, selecting a swelling composition for the additive composition, a first preform (P1) is produced, in accordance with a first geometry (G1), of basic polymer material with a degree of advancement sufficient for said first preform (P1) to be self-supporting, a confinement volume is defined between said first preform (P1) and an abutment element having facing same a second geometry (G2) which, at least in part different from the first, corresponds to a volume greater than that to which the first corresponds, said first preform (P1) is brought into contact in said confinement volume (14) with a sufficient amount of the swelling additive composition for the swelling action of which it is then the object to cause it to adopt said second geometry (G2) in a stressed condition, polymerisation of the resulting polymer material is effected and if necessary the second preform (P2) which is obtained in that way is surfaced to the final geometry (G0) desired for the required article (10).

2. A process according to claim 1 characterised in that, for defining the confinement volume (14), the first preform (P1) is disposed in a confinement enclosure of which one at least of the walls constitutes an abutment element.

3. A process according to either one of claims 1 and 2 characterised in that the basic polymer material and the swelling additive composition are so selected that the difference in refractive index between the basic polymer material and the polymer corresponding to the swelling additive composition is at least equal to 0.005.

4. A process according to any one of claims 1 to 3 characterised in that the basic polymer material comprises a polyolefin.

5. A process according to claim 4 characterised in that the basic polymer material is formed for a major part of styrene and the swelling additive composition essentially contains methyl methacrylate.

6. A process according to any one of claims 1 to 5 characterised in that the basic polymer material comprises a polyurethane.

7. A process according to claim 6 characterised in that the basic polymer material results in respect of the major part thereof from the reaction of a composition comprising at least one isocyanate and at least one polyol, and the swelling additive composition essentially contains styrene.

8. A process according to either one of claims 6 and 7 characterised in that the basic polymer material comprises both a polyurethane and a monomer such as an allylic, acrylic or methacrylic monomer.

9. A process according to any one of claims 1 to 8 characterised in that the basic polymer material also contains a product for joining its matrix to that of the swelling additive composition.

10. A process according to claim 1 characterised in that the refractive index gradient develops in a transverse direction with respect to that along which the selling action occurs.

FIG.1

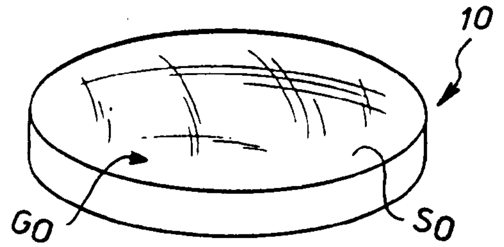


FIG.2

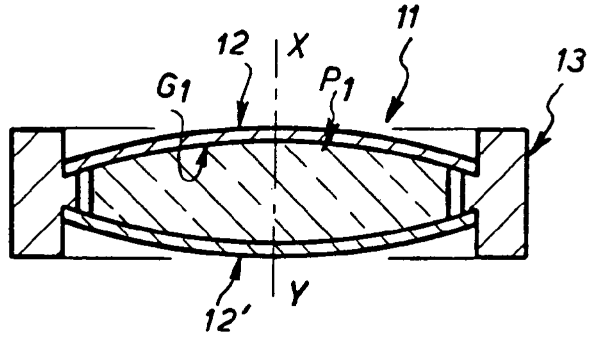


FIG.3

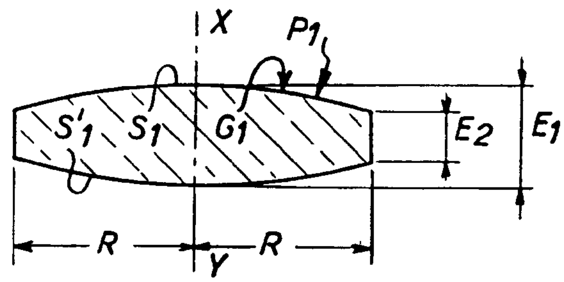


FIG.4

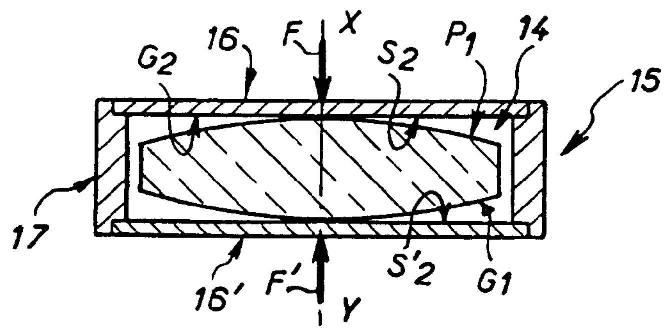


FIG.5

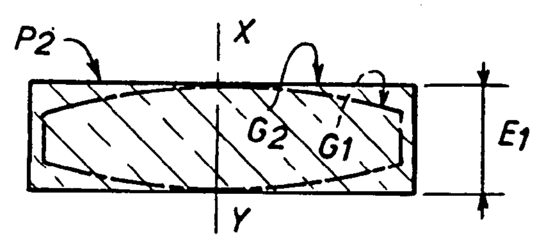


FIG.6

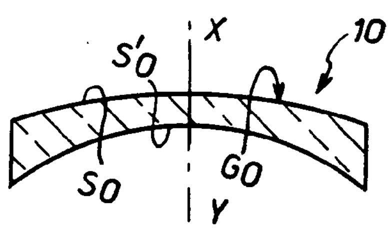

FIG. 7

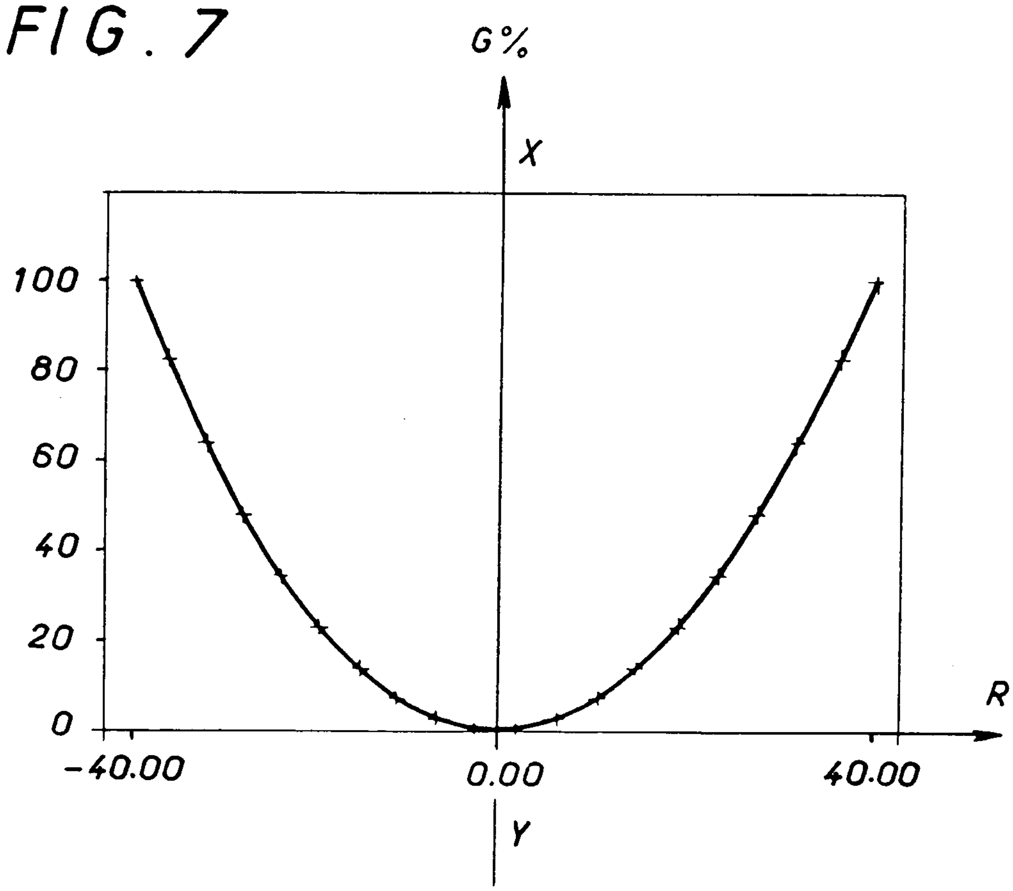
G%
X
100
80
60
40
20
0
R
-40.00
0.00
40.00
Y

FIG. 8

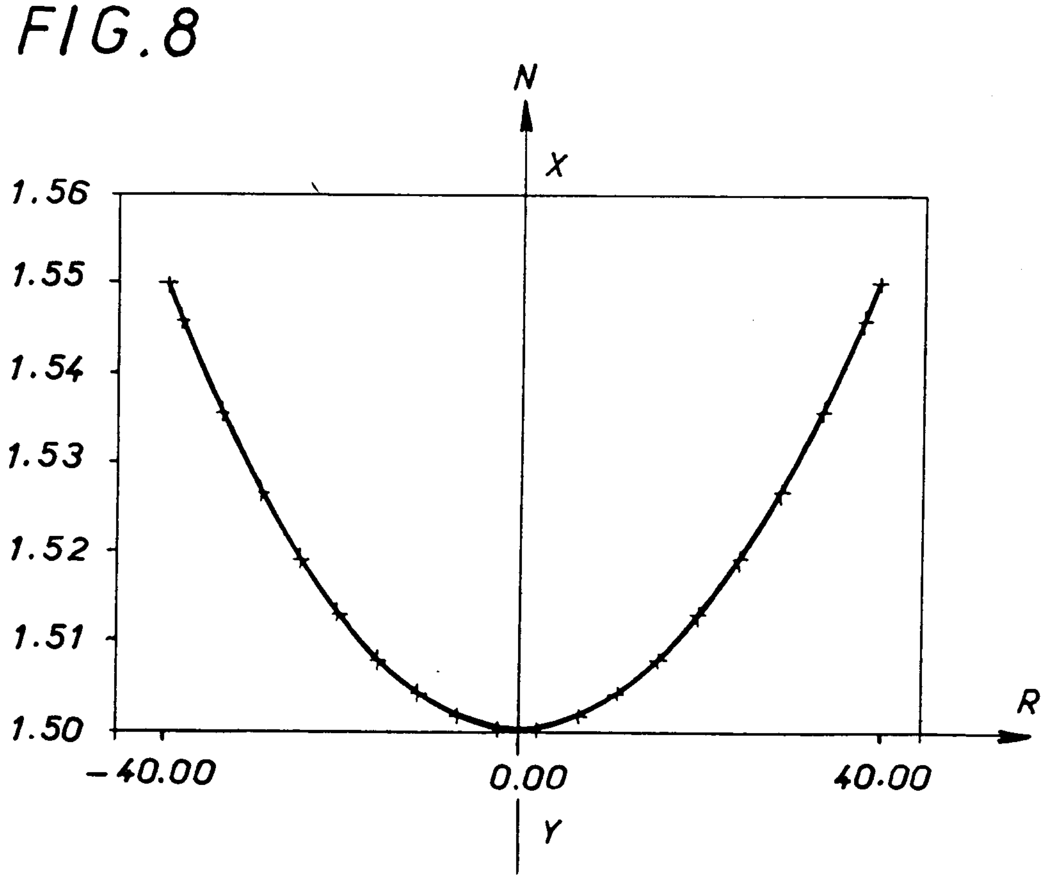
N
X
1.56
1.55
1.54
1.53
1.52
1.51
1.50
R
-40.00
0.00
40.00
Y

FIG. 9

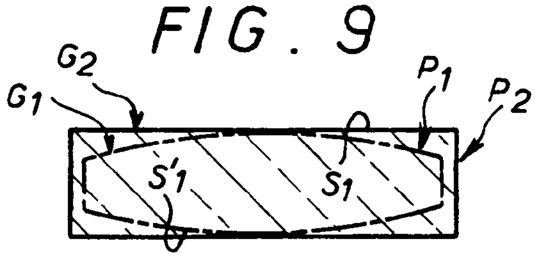


FIG. 11

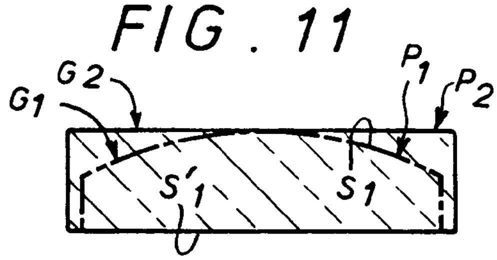


FIG. 10

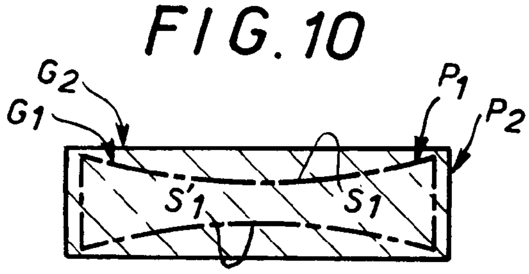


FIG. 12

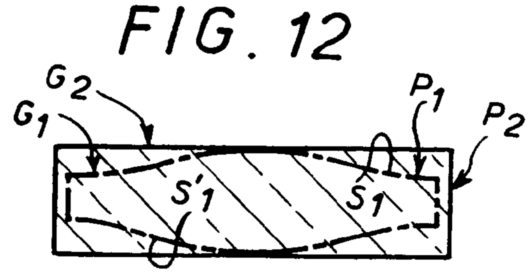


FIG. 13

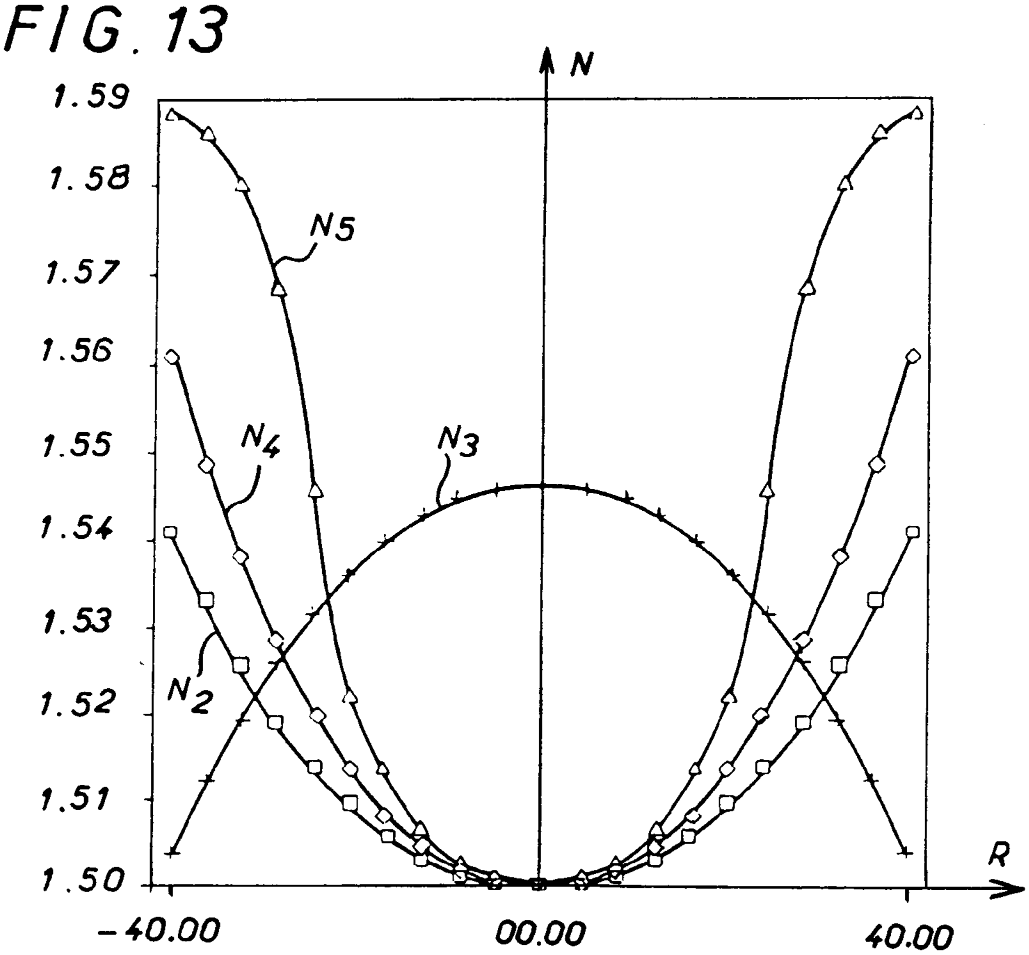


FIG. 14